# EUROPÄISCHE PATENTSCHRIFT

(11) **EP 1 261 838 B1**
(45) Veröffentlichungstag und Bekanntmachung des Hinweises auf die Patenterteilung: **15.12.2004**
(21) Anmeldenummer: 01923598.5
(22) Anmeldetag: 22.02.2001
(51) Int. Cl.: G01B 5/10, G01B 7/12, B65H 63/06

(54) **VORRICHTUNG ZUM FESTSTELLEN VON VERDICKUNGEN IN EINEM LAUFENDEN FADEN**
DEVICE FOR DETECTING A THICKENING IN A RUNNING THREAD
DISPOSITIF POUR DETECTER DES PARTIES EPAISSIES D'UN FIL EN DEPLACEMENT

(30) Priorität: 23.02.2000 DE 10008353
(43) Veröffentlichungstag der Anmeldung: 04.12.2002
(73) Patentinhaber: Zimmer Aktiengesellschaft, 60388 Frankfurt am Main (DE)
(72) Erfinder: WEICHEL, Andreas, 61250 Usingen (DE); SEIBEL, Stefan, 63477 Maintal (DE)
(74) Vertreter: Meyer-Dulheuer, Karl-Hermann, Dr.
(86) Internationale Anmeldenummer: PCT/EP2001/002010
(87) Internationale Veröffentlichungsnummer: WO 2001/063203

(56) Entgegenhaltungen:
- CA-A- 911 717
- DE-A- 4 124 626
- DE-B- 1 074 861
- US-A- 4 189 841
- US-A- 4 916 787

## Beschreibung

Die Erfindung betrifft eine Vorrichtung zum Feststellen von Verdickungen in einem laufenden Faden oder Faserbündel, bestehend aus einem einseitig befestigten in Laufrichtung des Fadens oder Faserbündels auslenkbaren und in die Ausgangslage durch Federkraft rückstellbaren gabelförmigen Führungselement, durch dessen in seiner Breite verstellbaren Spalt der Faden oder das Faserbündel läuft und das mit einem Bewegungsdetektor gekoppelt ist.

Es wurden bereits Detektoren zum Feststellen von Verdickungen eingesetzt, bei denen der Faden oder das Faserbündel durch einen Spalt zwischen zwei Platten hindurchläuft, wobei eine Platte schwenkbar gelagert ist Hierbei ist der Spalt durch die parallelen Kanten der beiden Platten begrenzt; durch eine Verdickung im Faden oder im Faserbündel wird die bewegliche Platte nach unten geschwenkt, und diese Schwenkbewegung wird durch einen Detektor festgestellt. Dieses System ist ziemlich träge und hat den weiteren Nachteil, dass Verdickungen an den Plattenkanten hängen bleiben, wobei häufig Fadenabrisse entstehen. Verklebungen infolge von Präparationsablagerungen machen das bekannte System während des Betriebs noch träger, und relativ häufige Reinigungen sind nötig. Hierfür muss der Spinnbetrieb in nachteiliger Weise unterbrochen werden. In der CA 911717 A ist eine ähnliche Vorrichtung beschrieben, bei der der Faden oder das Faserbündel durch den Spalt eines gabelartigen durch eine einseitig eingespannte Blattfeder gebildetes Führungselement läuft. Im Falle einer Verdickung des Fadens oder des Faserbündels wird das Führungselement in Laufrichtung des Fadens oder des Faserbündels gering ausgelenkt. Durch den auf der Blattfeder angebrachten Dehnungsmeßstreifen wird das Maß der Auslenkung erfasst.

Der Erfindung liegt die Aufgabe zugrunde, hier Abhilfe zu schaffen und Verdickungen in einem laufenden Faden oder einem Faserbündel auf einfache und betriebssichere Weise festzustellen. Dabei soll der Faden oder das Faserbündel mit der Verdickung problemlos weiterlaufen können, wie es, insbesondere für Spinnanlagen vorteilhaft ist.

Erfindungsgemäß wird diese Aufgabe dadurch gelöst, dass das Führungselement an einer Drehachse befestigt ist und dass der Spalt in seinem der Drehachse abgekehrten Abschnitt divergierend ausgebildet ist und in seinem der Drehachse zugekehrten Abschnitt parallel ausgebildet ist. Der Faden oder das Faserbündel läuft durch den Spalt des Führungselements, welches von einer Faden- oder Faserbündelverdickung aus seiner Ausgangslage in Laufrichtung des Fadens oder des Faserbündels wegbewegt wird, wobei durch die Bewegung ein Signal ausgelöst wird. Das die Bewegung meldende Signal kann mechanischer, optischer, akustischer, elektrischer oder elektromagnetischer Natur sein.

Weitere vorteilhafte Ausgestaltungen der Vorrichtung gemäß Anspruch 1 sind in den Ansprüchen 2 bis 6 wiedergegeben.

Das Führungselement wirkt mit einer Schraubenfeder zusammen, so dass das von einer Faden- oder Faserbündelverdickung aus der Ausgangslage bewegte Führungselement wieder in seine Ausganglage rückgestellt wird.

Die erfindungsgemäße Vorrichtung ist in der Zeichnung beispielhaft dargestellt und wird nachstehend erläutert. Es zeigen:
- Fig. 1: die Vorrichtung in einem horizontalen Schnitt nach der Linie I-I in Fig. 2 in schematischer Darstellung und
- Fig. 2: die Vorrichtung in einem vertikalen Schnitt nach der Linie II-II in Fig.1.

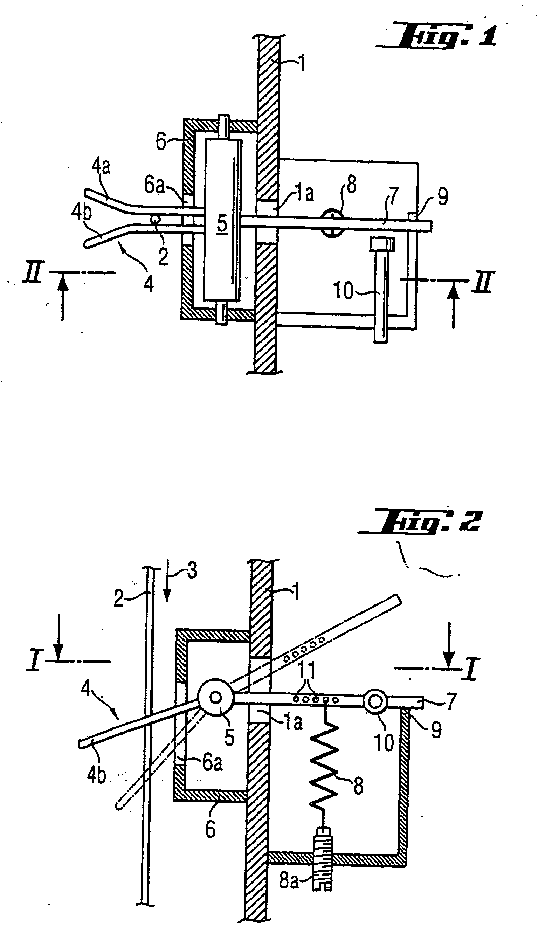

An einer vertikalen Wand(1), die zum Beispiel zu einer Spinnanlage gehört, ist die Vorrichtung zum Feststellen von Verdickungen in einem Faden(2) angeordnet. In Fig.1 und Fig.2 wird davon ausgegangen, dass der Faden(2) sich vertikal von oben nach unten in der Richtung des Pfeils(3) bewegt, zum Beispiel durch ein nicht dargestelltes Abzugswerk.

Der Faden(2) läuft durch ein gabelartiges Führungselement(4)hindurch, dessen Spalt von den beiden Stiften(4a,4b) gebildet ist. Die Stifte(4a,4b), die keramikbeschichtet sein können, bilden in dem der Drehachse(5) zugekehrten Abschnitt einen parallelen Spalt und in dem der Drehachse(5) abgekehrten Abschnitt einen divergierenden Spalt. Der Abstand der Stifte(4a,4b) zueinander kann einstellbar ausgebildet sein, was jedoch in der Zeichnung nicht dargestellt ist.

Das Führungselement(4) ist an der horizontalen Drehachse(5) befestigt, welche schwenkbar in dem Gehäuse(6) gelagert ist. Durch eine Öffnung(6a) im Gehäuse(6) ist das Führungselement(4) nach außen geführt. Mit der Drehachse(5) verbunden ist ein als Signalarm dienender Hebelarm(7), der durch eine Schraubenfeder(8) in die Ausgangslage zu einem ortsfesten Anschlag(9) rückstellbar ist, vergleiche Fig.2. Der Hebelarm(7) wird durch eine Öffnung(1a) in der vertikalen Wand(1) geführt.

Wenn der laufende Faden(2) eine Verdickung aufweist, wird kurzzeitig durch die Verdickung auf das Führungselement(4) eine in Laufrichtung des Fadens(2)wirkende Kraft ausgeübt, welche das Führungselement(4) nach unten schwenkt, wie es gestrichelt in Fig.2 dargestellt ist. Der durch die Verdickung verursachte Stoß ist relativ gering und die Verdickung selbst kann auf den Stiften(4a, 4b) herabgleiten. Durch die divergierende Erweiterung des Abstandes der Stifte(4a,4b) in dem der Drehachse(5) abgekehrten Abschnitt gibt das Führuagselement(4) nach kurzer Schwenkbewegung den Faden wieder frei, der somit ungestört weiterlaufen kann. Gleichzeitig schwenkt das. Führungselement(4), rürkgestellt durch die Federkraft der Schraubenfeder(8), wieder in die Ausgangslage zurück. Wenn der Faden(2) von einer Spinnanlage kommt, ist er beim Erreichen des Führungselements(4) bereits abgekühlt und nicht mehr oder kaum noch plastisch.

Die Konstruktion ist so ausgeführt, dass es zu keinen Verklebungen und Betriebsstörungen, insbesondere durch das Ablagern von Präparation kommen kann. Dies wird durch gekapselte Lager und ein weitgehend geschlossenes Gehäuse(6) erreicht.

Beim Schwenken des Führungselements(4) in Laufrichtung des Fadens(2) wird der Hebelarm(7) nach oben geschwenkt, wie es in Fig.2 gestrichelt dargestellt ist. Dabei bewegt sich der Hebelarm(7) weg vom Wirkungsbereich eines Detektors(10), der ortsfest befestigt ist. Diese Bewegung des Hebelarms(7) meldet der Detektor(10) in an sich bekannter Weise und macht z.B. eine Bedienungsperson auf den Vorgang aufmerksam. Die Bedienungsperson ist nun in der Lage, die nötigen Maßnahmen zu ergreifen und z.B. Reinigungsarbeiten an der Spinnanlage durchzuführen. Um die Rückstellkraft der Schraubenfeder(8) verändern zu können, weist der Hebelarm(7) mehrere Ösen(11) auf, in die die Schraubenfeder(8) wahlweise eingehängt werden kann. Zusätzlich kann die Schraubenfeder (8) mit einem längenverstellbaren System, z.B. einem Gewindestift(8a), vergleiche Fig. 2, verbunden sein, so dass eine stufenlose Einstellung der Federkraft möglich ist.

## Patentansprüche

1. Vorrichtung zum Feststellen von Verdickungen in einem laufenden Faden(2) oder Faserbündel, bestehend aus einem einseitig befestigten in Laufrichtung des Fadens oder Faserbündels auslenkbaren und in die Ausgangslage durch Federkraft rückstellbaren gabelförmigen Führungselement(4), durch dessen in seiner Breite verstellbaren Spalt der Faden oder das Faserbündel läuft und das mit einem Bewegungsdetektor(10) verbunden ist, **dadurch gekennzeichnet, dass** das Führungselement(4) an einer Drehachse(5) befestigt ist und dass der Spalt in seinem der Drehachse abgekehrten Abschnitt divergierend ausgebildet ist und in seinem der Drehachse zugekehrten Abschnitt parallel ausgebildet ist.

2. Vorrichtung nach Anspruch 1, **dadurch gekennzeichnet, dass** auf der der Befestigung des Führungselements(4)abgekehrten Seite der Drehachse(5) ein mit einer Schraubenfeder(8) verbundener als Signalarm dienender Hebelarm(7) angebracht ist.

3. Vorrichtung nach Anspruch 2, **dadurch gekennzeichnet, dass** die Rückstellkraft der Schraubenfeder(8) einstellbar ist.

4. Vorrichtung nach einem der Ansprüche 1 bis 3, **dadurch gekennzeichnet, dass** das Führungselement(4) in der Ausgangslage gegenüber der die Drehachse(5) einschließenden horizontalen Ebene geneigt angeordnet ist.

5. Vorrichtung nach einem der Ansprüche 1 bis 4, **dadurch gekennzeichnet, dass** das Führungselemeat(4)aus zwei den Spalt begrenzenden Stiften(4a,4b) besteht.

6. Vorrichtung nach einem der Ansprüche 1 bis 5, **dadurch gekennzeichnet, dass** die die Auslenkung des Führungselements(4) ermöglichenden Bauteile gekapselt sind.

## Claims

1. A device for detecting a thickening in a running thread (2) or fibre bundle, consisting of a forkshaped guide element (4) which is affixed on one side, which can be deflected in the running direction of the thread or fibre bundle and which can be restored to the initial position by spring force, through whose adjustable-width gap the thread or the fibre bundle runs and which is connected to a motion detector (10), **characterised in that** the guide element (4) is affixed to an axis of rotation (5) and that the gap is constructed as diverging in its section facing away from the axis of rotation and is constructed as parallel in its section facing the axis of rotation.

2. The device according to claim 1, **characterised in that** on the side of the axis of rotation (5) facing away from the fixing of the guide element (4), there is attached a lever arm (7) connected to a helical spring (8), which serves as a signal arm.

3. The device according to claim 2, **characterised in that** the restoring force of the helical spring (8) is adjustable.

4. The device according to any one of claims 1 to 3, **characterised in that** the guide element (4) in the initial position is arranged inclined towards the horizontal plane which includes the axis of rotation (5).

5. The device according to any one of claims 1 to 4, **characterised in that** the guide element (4) consists of two pins (4a, 4b) which delimit the gap.

6. The device according to any one of claims 1 to 5 **characterised in that** the components which make possible the deflection of the guide element (4) are encapsulated.

## Revendications

1. Dispositif de détection des parties épaissies d'un fil ou faisceau de fibres en
déplacement (2), composé d'un élément de guidage en forme de fourche (4) fixé d'un côté, pouvant être dévié dans le sens de déplacement du fil ou du faisceau de fibres et réinitialisable en position de départ par force de ressort, à travers lequel passe, dans sa fente réglable en largeur, le fil ou le faisceau de fibres et qui est relié à un détecteur de mouvement (10) , **caractérisé en ce que** l'élément de guidage (4) est fixé sur un axe de rotation (5) et que la fente, dans sa section détournée de l'axe de rotation, est de conformation divergente et, dans sa section tournée vers l'axe de rotation, de conformation parallèle.

2. Dispositif selon la revendication 1, **caractérisé en ce que**, sur le côté de l'axe
de rotation (5) détourné de la fixation de l'élément de guidage (4), est installé un bras de levier (7) servant de bras de signalisation et relié à un ressort hélicoïdal (8).

3. Dispositif selon la revendication 2, **caractérisé en ce que** la force de
réinitialisation du ressort hélicoïdal (8) est réglable.

4. Dispositif selon l'une quelconque des revendications 1 à 3, **caractérisé en ce**
**que** l'élément de guidage (4) est, en position de départ, disposé incliné par rapport au plan horizontal incluant l'axe de rotation (5).

5. Dispositif selon l'une quelconque des revendications 1 à 4, **caractérisé en ce**
**que** l'élément de guidage (4) est composé de deux tiges (4a, 4b) limitant la fente.

6. Dispositif selon l'une quelconque des revendications 1 à 5, **caractérisé en ce**
**que** les composantes permettant la déviation de l'élément de guidage (4) sont encapsulées.
